# EUROPEAN PATENT SPECIFICATION

(11) **EP 3 366 522 B1**
(45) Date of publication and mention of the grant of the patent: **03.02.2021**
(21) Application number: 18168362.4
(22) Date of filing: 08.12.2015
(51) Int. Cl.: B60R 11/04

(54) **MONITORING SYSTEM, AND VEHICLE MOUNTABLE WITH MONITORING SYSTEM**
ÜBERWACHUNGSSYSTEM UND MIT ÜBERWACHUNGSSYSTEM AUSRÜSTBARES FAHRZEUG
SYSTÈME DE SURVEILLANCE ET VÉHICULE POUVANT ÊTRE ÉQUIPÉ D'UN SYSTÈME DE SURVEILLANCE

(30) Priority: 15.12.2014 JP 2014253468; 12.11.2015 JP 2015222398
(43) Date of publication of application: 29.08.2018
(62) Divisional of application: 15198451.5
(73) Proprietor: Ricoh Company, Ltd., Tokyo 143-8555 (JP)
(72) Inventor: WATANABE, Eita, Tokyo, 143-8555 (JP); SEKIGUCHI, Hiroyoshi, Tokyo, 143-8555 (JP)
(74) Representative: SSM Sandmair

(56) References cited:
- EP-A1- 3 034 359
- EP-A2- 2 803 944
- WO-A1-01/49527
- JP-A- 2001 233 139
- US-A1- 2004 183 906
- US-A1- 2006 072 008

## Description

### BACKGROUND

### Technical Field

The present invention relates to a monitoring system, and a vehicle mountable with the monitoring system.

### Background Art

Traffic accidents such as collision of vehicles and other objects (e.g., vehicles, persons, objects) occur on roads or the like. To prevent accidents, a camera system is mounted to a vehicle, with which images of objects such as persons, vehicles, and signs and white lines on a road face ahead of the vehicle can be captured by the camera, and the captured images are processed real time to inform objects existing ahead of the vehicle to a driver of the vehicle.

For example, JP-2010-042703-A and JP-2013-255064-A disclose technologies that a camera is mounted in a room of a vehicle to devise a driving support system for enhancing safety. Further, JP-2013-66247 discloses a technology that multiple cameras are disposed for a vehicle by orientating each of the cameras to different directions from the vehicle to monitor situations around the vehicle.

However, if the stereo camera is mounted in the room of the vehicle, the stereo camera may block the field of view of a driver, and vehicle occupants in the internal space may feel a sense of oppression due to the presence of the stereo camera. Further, since background reflections or reflected glare occurred by light reflected on a windshield may be captured as an image, and stains may occur on the windshield, the performance of the stereo camera may deteriorate, and thereby a user maintenance work is required to be performed frequently.

JP-2010-042703-A discloses a configuration that a vehicle-mounted camera system includes a light block unit to block an entry of light reflected on the windshield from the lower side of the field of view, in which the light block unit can be driven by a drive unit. However, this configuration including the light block unit and the drive unit increases the size of the vehicle-mounted camera system, with which the field of view of a driver is blocked, vehicle occupants in the internal space may feel a sense of oppression, and further this configuration is not effective to stains occurred on the windshield.

JP-2013-255064-A discloses a configuration that a vehicle-mounted camera system includes an anti-reflection layer such as an anti-reflection film disposed on a windshield ahead of the vehicle-mounted camera mounted inside the vehicle. However, this configuration is not effective to stains occurred on the windshield. Further, since the vehicle-mounted camera system is mounted inside the vehicle, vehicle occupants in the internal space may feel a sense of oppression.

Further, the national regulation such as the National Agency of Vehicle Inspection in Japan has set the vehicle inspection regulations, in which a regulation of an object disposable on a windshield is specified. The regulation allows the installation of anti-reflection film and vehicle-mounted camera, but regulates the size of the anti-reflection film and vehicle-mounted camera within twenty (20) % of the upper side of the windshield.

The vehicle-mounted camera system is required to constantly capture images of objects correctly to control the vehicle correctly, but the above mentioned issues such as the sense of oppression in the internal space, stains on the windshield, and background reflections or reflected glare still remain for the vehicle-mounted camera system.

JP 2001-233139 discloses a stereo camera fitted on a vehicle which is configured to conduct a distance measurement for monitoring the status of a vehicle ahead. That document also discloses that the recognition result may serve as a basis for performing vehicle control, such as a slowdown.

US 2004/0183906 A1 discloses an image processing unit for processing images captured by a set of infrared cameras on a right and left side of a vehicle in order to determine for example a distance from a pedestrian.

EP 2 803 944 A2 discloses a distance measurement apparatus for use in a vehicle which is mounted with a rear-view mirror disposed at a windshield of the vehicle.

### SUMMARY

In one aspect of the present disclosure, a monitoring system mountable or fixable on a vehicle is devised. The monitoring system includes an image capture unit including a pair of image capture devices disposed side by side in a horizontal direction to capture an image of an object ahead of the vehicle, the image capture unit fixable on an exterior frame of the vehicle, a distance calculator to calculate distance between the vehicle and the object ahead of the vehicle based on a signal transmitted from the pair of the image capture devices, and a signal generator to generate a control signal to control the vehicle based on a signal transmitted from the distance calculator. The above described monitoring system mountable or fixable to the vehicle can effectively perform the range finding without receiving the effect of stains adhering on the windshield and the lens of the image capture device, without causing a sense of oppression in the internal space of the vehicle, without blocking the field of view from the internal space of the vehicle, and by complying to the vehicle inspection regulation.

The invention is defined by claim 1. The dependent claims define preferred embodiments of the invention.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1A is a schematic perspective view of a vehicle mounted with a monitoring system according to one or more example embodiments of the present invention;
FIG. 1B is an example of a hardware configuration of the monitoring system shown in FIG. 1A;
FIG. 2A and FIG. 2B illustrate the monitoring system, a roof, and a windshield of the vehicle of FIG. 1A, in which the monitoring system is disposed on the roof;
FIG. 3A illustrates an interior view of a vehicle when the monitoring system is mounted or fixed in a room of the vehicle;
FIG. 3B illustrates an interior view of a vehicle when the monitoring system is mounted or fixed on the roof or in a space between the roof and a headlining of the vehicle;
FIG. 4A illustrates a configuration that the monitoring system is mounted or fixed in a room of the vehicle;
FIG. 4B illustrates a configuration that the monitoring system is mounted or fixed on an exterior frame of the vehicle instead of in the room of the vehicle;
FIG. 4C illustrates reflected glare occurring on the windshield in the configuration of FIG. 4A;
FIG. 4D illustrates reflected glare occurring on the windshield in the configuration of FIG. 4B;
FIG. 5A illustrates a configuration that the monitoring system is mounted or fixed in a room of the vehicle;
FIG. 5B illustrates a configuration that the monitoring system is mounted or fixed on an exterior frame of the vehicle instead of in the room of the vehicle;
FIG. 5C illustrates foreign objects adhering on the windshield in the configuration of FIG. 5A;
FIG. 5D illustrates foreign objects adhering on the windshield in the configuration of FIG. 5B;
FIG. 6A illustrates one configuration for mounting the monitoring system on a roof of the vehicle;
FIG. 6B illustrates one configuration for mounting the monitoring system in a space between a roof and a headlining at the front side of the roof;
FIGs. 7(a) to 7(f) illustrate six standard views of the monitoring system shown in FIG. 1.
FIGs. 8(a) to 8(f) illustrate another six standard views of the monitoring system shown in FIG. 1.
FIGs. 9(a) to 9(f) illustrate another six standard views of the monitoring system shown in FIG. 1.
FIGs. 10(a) to 10(f) illustrate another six standard views of the monitoring system shown in FIG. 1.
FIG. 11A illustrates a configuration of the monitoring system mounted or fixed on a roof of a vehicle with a ventilation mechanism;
FIG. 11B illustrates an airflow around the roof of the vehicle when the vehicle is moving; and
FIG. 11C is a schematic cross-sectional view of the monitoring system of FIG. 11A.

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

### DETAILED DESCRIPTION

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views shown in the drawings, specific terminology is employed for the sake of clarity, the present disclosure is not limited to the specific terminology so selected and it is to be understood that each specific element includes all technical equivalents that operate in a similar manner and achieve a similar result. Referring now to the drawings, apparatus or system according to one or more example embodiments are described hereinafter.

A description is given of a monitoring system or apparatus mountable to a moveable apparatus according to one or more example embodiments of the present invention. The movable apparatus can be vehicles such as automobiles, trucks, ships, airplanes, trains, motor cycles, construction machines, robots, or the like. Further, the monitoring system according to one or more example embodiments can be applied to non-movable apparatuses such as factory robots, monitoring cameras, surveillance cameras or the like that are fixed at one position, area, or the like.

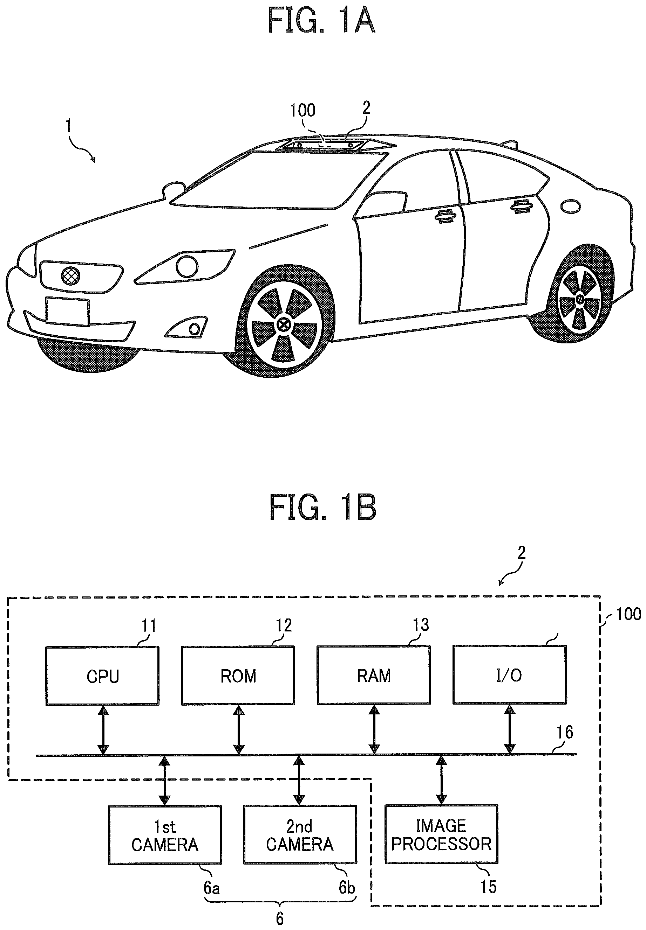

To be described in this specification, a monitoring system or apparatus of one or more example embodiments of the present invention is mountable or fixable to a vehicle. For example, the monitoring system can be mounted or fixed on a roof of the vehicle, or in a space between the roof and a headlining of the vehicle. The monitoring system can be used to generate detection signals of moving conditions, cruising conditions, and driving conditions of the vehicle, and alarm or warning signals for the driver. For example, the monitoring system can be mounted or fixed to the vehicle as illustrated in FIGs. 1A and 1B, in which the monitoring system can be fixed on the roof of the vehicle such as an automobile, in which a casing of the monitoring system is fixed on the roof of the vehicle or the casing of the monitoring system is formed integrally with the roof of the vehicle.

### (Configuration)

FIG. 1A is a schematic perspective view of a vehicle 1 mounted or fixed with a monitoring system 2 of one or more example embodiments of the present invention. FIG. 1B is an example of a hardware configuration of the monitoring system 2 shown in FIG. 1A. As illustrated in FIG. 1A, the monitoring system 2 can be mounted or fixed on a roof 4 of the vehicle 1 such as a front side of the vehicle 1. As illustrated in FIG. 1B, the monitoring system 2 includes, for example, an image capture unit 6, and a signal generator 100. The image capture unit 6 includes a pair of image capture devices 6a and 6b such as first and second cameras arranged side by side along the horizontal direction to capture images of objects ahead of the vehicle 1. The signal generator 100 generates detection signals of moving conditions, cursing conditions, and driving conditions of the vehicle 1, and alarm or warning signals to alarm the driver of the vehicle 1 based on signals detected by the image capture unit 6.

As illustrated in FIG. 1B, the monitoring system 2 includes, for example, the image capture unit 6 and the signal generator 100. The image capture unit 6 includes the image capture devices 6a and 6b. The signal generator 100 includes, for example, a central processing unit (CPU) 11, a read only memory (ROM) 12, a random access memory (RAM) 13, an input/output (I/O) interface 14, an image processor 15, and a bus line 16. The image capture unit 6 includes the image capture devices 6a and 6b as a pair of image capture devices arranged side by side along the horizontal direction to capture images of objects ahead of the vehicle 1. Each of the image capture devices 6a and 6b is, for example, a charge coupled device (CCD) camera.

The CPU 11 is, for example, a microprocessor used for controlling the monitoring system 2 as a whole, and generates various signals such as a speed change signal, a stop signal, a directional change signal of the vehicle 1, and an alarm or warning signal to the driver based on a recognition result of the image processor 15. The ROM 12 is, for example, a mask ROM that stores control programs of the monitoring system 2. The RAM 13 is, for example, a flash memory that temporarily stores the control programs stored in the ROM 12 to execute the control programs. The I/O interface 14 is used to communicate (i.e., transmit and receive) signals with a control circuit of the vehicle 1. The image processor 15 is used to recognize other vehicles, persons, objects, white lines, and road shape ahead of the vehicle 1, distance to other vehicles, persons, and objects ahead of the vehicle 1, and moving speed of the vehicle 1 based on images captured by the image capture devices 6a and 6b. The monitoring system 2 employs a stereo camera system by using the two image capture devices 6a and 6b. The monitoring system 2 can be used to calculate or measure distance to other vehicles, persons, and objects ahead of the vehicle 1 by using a distance calculator or range calculator, in which the distance can be calculated by using the principle of triangulation. The distance calculator can be configured by the CPU 11, the ROM 12 and the RAM 13. Further, the distance calculator can be configured by an application specific integrated circuit (ASIC) and/or field programmable gate arrays (FPGA).

The signal generator 100 can generate various control signals used for controlling the image capture unit 6 and for controlling driving, stopping, steering of the vehicle 1, and alarming or warning to a driver of the vehicle 1.

The signals generated by the signal generator 100 can be input to a braking system, a drive system, and alarm or warning sound system of the vehicle 1 to implement the stopping, driving, alarm or warning sound generation.

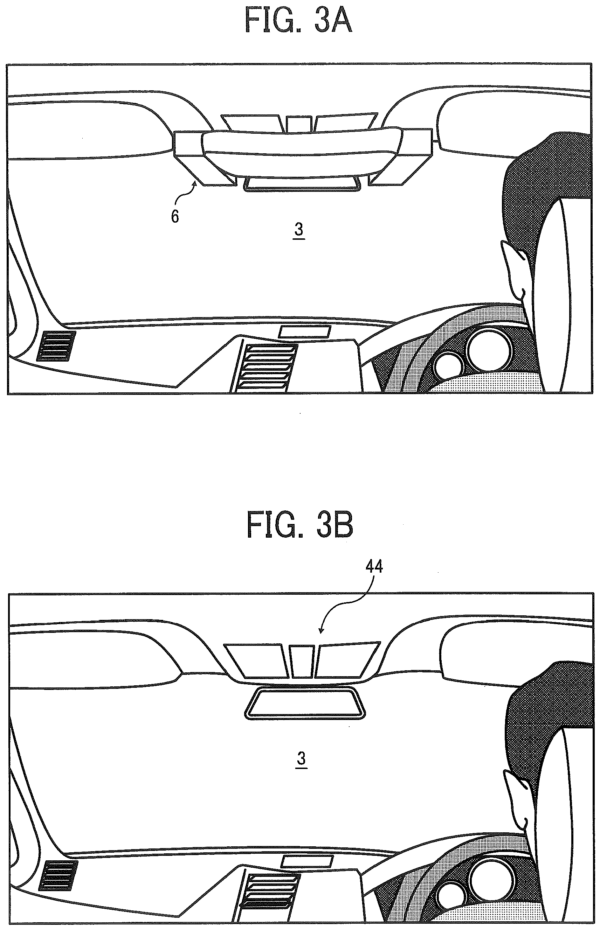

In an example configuration of FIG. 1A, the monitoring system 2 is not mounted or fixed in a room of the vehicle 1, but the monitoring system 2 is mounted or fixed on an exterior frame of the vehicle 1 such as on the roof 4 at the front side of the vehicle 1, but the configuration is not limited hereto. For example, the monitoring system 2 can be mounted or fixed in a space between the roof 4 and a headlining 44 at the front side of the vehicle 1 (see FIG. 3B). By mounting or fixing the monitoring system 2 on the vehicle 1 such as at the front side on the roof 4 or in the space between the roof 4 and the headlining 44, problems that may occur when the monitoring system 2 is mounted or fixed in the room of the vehicle 1 can be avoided or solved.

A description is given of one feature of the monitoring system 2 of one or more example embodiments of the present invention. Conventionally, when the image capture unit 6 (image capture devices 6a and 6b) is mounted or fixed in the room of the vehicle 1, vehicle occupants may feel a sense of oppression in the room of the vehicle 1, and the field of view of a driver is blocked. For example, when a stereo camera such as the image capture unit 6 (image capture devices 6a and 6b) having a relatively greater size is mounted or fixed in the room of the vehicle 1, the internal space of the vehicle 1 becomes smaller, and vehicle occupants may feel a sense of oppression. Further, since the stereo camera may be mounted or fixed at a position within the field of view of a driver, the field of view is blocked.

As to the one or more example embodiment of the present invention, the monitoring system 2 is not mounted or fixed in the room of the vehicle 1, but the monitoring system 2 is mounted or fixed on an exterior frame of the vehicle 1 such as the roof 4 or in the space between the roof 4 and the headlining 44 of the vehicle 1, with which the above mentioned sense of oppression and the blocking of field of view can be avoided or solved.

As illustrated in FIG. 1A, when the monitoring system 2 is mounted or fixed on the roof 4 at the front side of the vehicle 1 or in the space between the roof 4 and the headlining 44 at the front side of the vehicle 1, comfortableness of vehicle occupants in the room of the vehicle 1 is not degraded as illustrated in FIG. 3B, and further, since the image capture unit 6 (image capture devices 6a and 6b) is not mounted or fixed at a position within the field of view of the vehicle occupants, the field of view of the driver is not blocked.

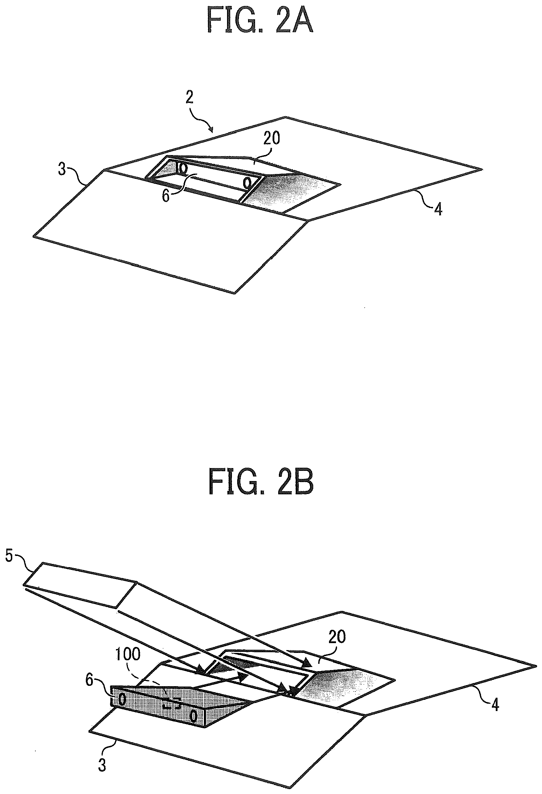

FIGs. 2A and 2B illustrate the monitoring system 2, the roof 4, and a windshield 3 of the vehicle 1 of FIG. 1A, in which the monitoring system 2 is mounted or fixed on the roof 4. FIG. 2A illustrates one configuration that the monitoring system 2 includes a casing 20 formed integrally with the roof 4 of the vehicle 1, and the image capture unit 6 of the monitoring system 2 is fixed in the casing 20 formed at the space between the roof 4 and the headlining 44 of the vehicle 1. In this configuration, the casing 20 can be assumed as a part of the roof 4 of the vehicle 1. Further, an opening of the casing 20 of the monitoring system 2 can be covered or sealed by a cover 5 such as a light transmittable cover. The cover 5 can be made of the same material of the windshield 3 of the vehicle 1 such as laminated glass but not limited hereto.

FIG. 3A illustrates an interior view of the vehicle 1 when the image capture unit 6 such as the stereo camera of the monitoring system 2 is mounted or fixed in the room of the vehicle 1, and FIG. 3B illustrates an interior view of the vehicle 1 when the monitoring system 2 is mounted or fixed on the front side of the roof 4 or in the space between the roof 4 and the headlining 44 at the front side of the roof 4. As can be understood from FIGs. 3A and 3B, the field of view of FIG. 3B can be set greater than the field of view of FIG. 3A, and the vehicle occupants may not feel a sense of oppression in the room of the vehicle 1 shown in FIG. 3B.

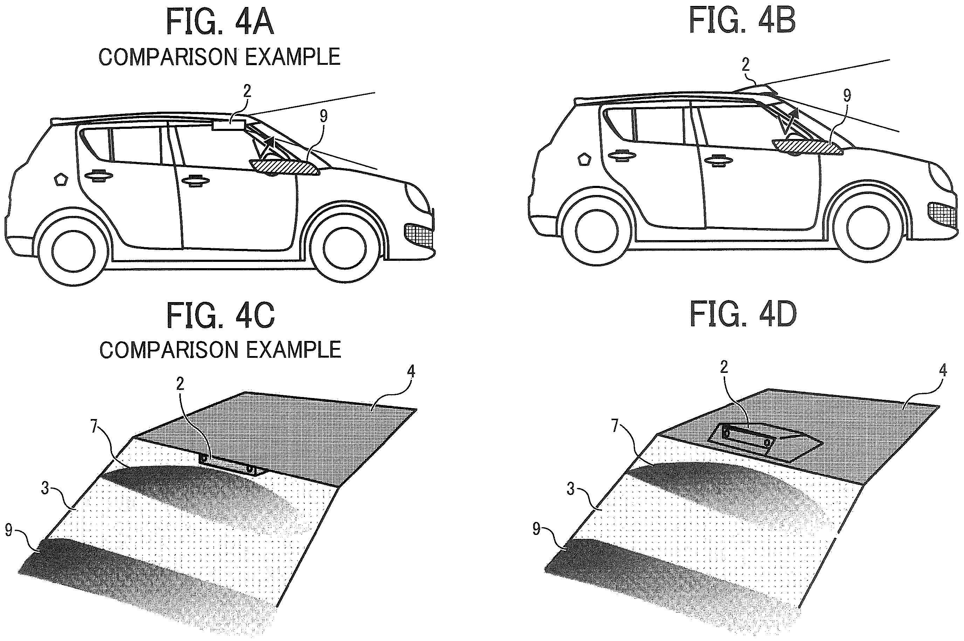

Further, the monitoring system 2 mounted or fixed on the roof 4 or in the space between the roof 4 and the headlining 44 can reduce, in particular prevent the effect of background reflections or reflected glare to the field of view of the image capture unit 6. Specifically, when the monitoring system 2 is mounted or fixed in the room of the vehicle 1 as illustrated in FIG. 4A, light reflected on an instrument panel 9 or other objects disposed near the instrument panel 9 (i.e., light reflected from the underside of the field of view) may become the background reflections or reflected glare affecting the field of view on the windshield 3. If the background reflections or reflected glare occurs on the windshield 3, the image capture unit 6 also captures the background reflections or reflected glare occurring on the windshield 3 as images, with which persons and objects may not be captured correctly, and the precision of recognition processing may deteriorate.

By contrast, when the monitoring system 2 is mounted or fixed in the space between the roof 4 and the headlining 44 at the front side of the vehicle 1 as illustrated in FIGs. 4B and 4D, the monitoring system 2 does not capture the light (i.e., background reflections or reflected glare) reflected on the instrument panel 9 or other objects as illustrated in FIG. 4B. FIG. 4A illustrates a configuration that the monitoring system 2 is mounted or fixed in the room of the vehicle 1. FIG. 4B illustrates a configuration that the monitoring system 2 is mounted or fixed on an exterior frame of the vehicle 1 such as the roof 4 instead of in the room of the vehicle 1. FIG. 4C illustrates reflected glare 7 occurring on the windshield 3 in the configuration of FIG. 4A. FIG. 4D illustrates reflected glare 7 occurring on the windshield 3 in the configuration of FIG. 4B.

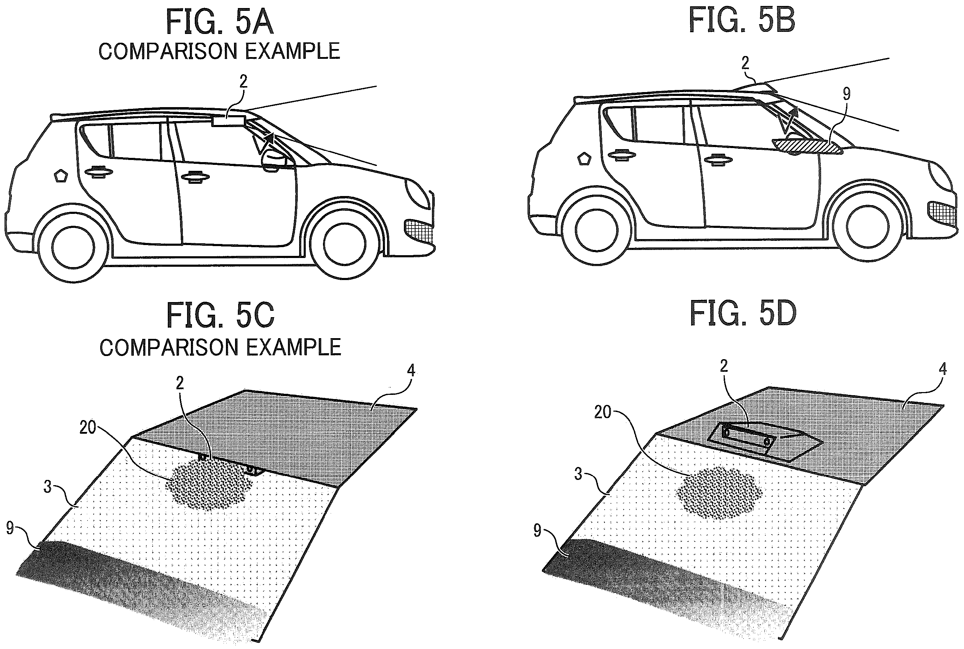

Further, FIG. 5A illustrates a configuration that the monitoring system 2 is mounted or fixed in the room of the vehicle 1. FIG. 5B illustrates a configuration that the monitoring system 2 is mounted or fixed on an exterior frame of the vehicle 1 such as the roof 4 instead of in the room of the vehicle 1. FIG. 5C illustrates foreign objects 20 adhering on the windshield 3 in the configuration of FIG. 5A. FIG. 5D illustrates foreign objects 20 adhering on the windshield 3 in the configuration of FIG. 5B.

As to the configuration of comparison example of FIGs. 5A and 5C that the monitoring system 2 is mounted or fixed in the room of the vehicle 1, the surface of the windshield 3 corresponding to the field of view may be touched by hands of a driver and other vehicle occupants and objects, with which the foreign objects 20 such as stains of sebum sebaceous matter, dust, and vapor may adhere on the windshield 3. Further, the foreign objects 20 such as stains of sebum sebaceous matter, dust, and vapor may adhere on the lenses of the image capture devices 6a and 6b of the monitoring system 2. If the windshield 3 and/or the lenses of the image capture devices 6a and 6b are adhered with the foreign objects 20, the monitoring system 2 captures images of target objects with images of the foreign objects 20, with which persons and objects cannot be captured correctly, and thereby the precision of recognition processing may deteriorate in the configuration of FIGs. 5A and 5C.

By contrast, when the monitoring system 2 is mounted or fixed in the space between the roof 4 and the headlining 44 at the front side of the vehicle 1 as illustrated in FIGs. 5B and 5D, the monitoring system 2 is not mounted or fixed in the room of the vehicle 1. Therefore, the foreign objects 20 such as stains of sebum sebaceous matter, dust, vapor does not adhere on an inner face of the cover 5 of the monitoring system 2 in the configuration of FIGs. 5B and 5D, with which the field of view of the monitoring system 2 can be secured at a good level.

Further, the monitoring system 2 of the one or more example embodiments of the present invention can comply with the vehicle inspection regulation. The vehicle inspection regulation "5-47" regulates objects disposable on a window glass to regulate objects attachable on the window glass of a vehicle. The vehicle inspection regulation "5-47" allows to dispose objects such as anti-reflection films and vehicle-mounted cameras on the windshield, but the size of object is limited to the up-to twenty percent (20 %) at the upper side of the windshield. If the monitoring system 2 is mounted or fixed in the room of the vehicle 1, the image capture unit 6 is fixed near the windshield 3, in which the monitoring system 2 may not comply with the vehicle inspection regulation depending on the installation position and the size of the monitoring system 2.

By contrast, when the monitoring system 2 is mounted or fixed in the space between the roof 4 and headlining 44 at the front side of the vehicle 1 as illustrated FIG. 1A, the monitoring system 2 can comply with the vehicle inspection regulation "5-47" regulating the objects disposable on the window glass.

A description is given of another feature of the monitoring system 2 of one or more example embodiments of the present invention. The monitoring system 2 can be mounted or fixed on the roof 4 of the vehicle 1. Specifically, the image capture unit 6 of the monitoring system 2 can be fixed in the casing 20 formed integrally with the roof 4 of the vehicle 1, in which the boundary of the casing 20 and the roof 4 becomes substantially seamless appearance because the casing 20 can be assumed as a part of the roof 4.

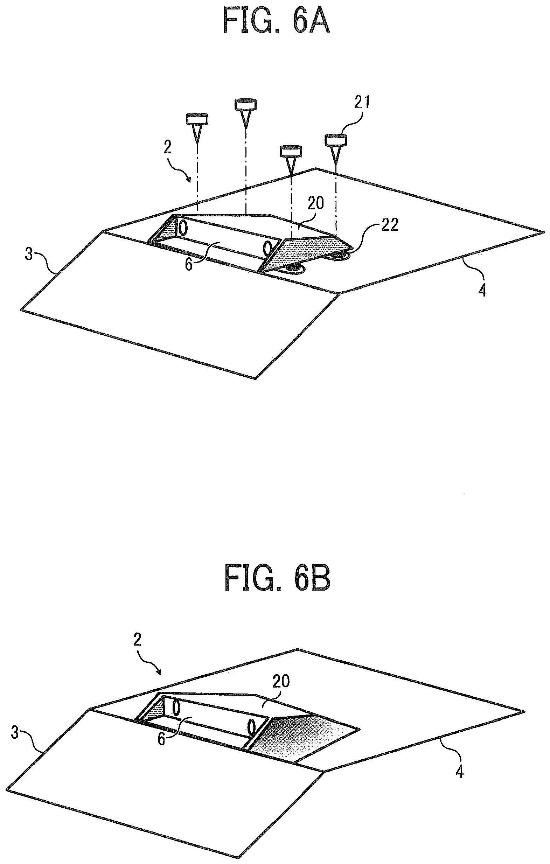

FIG. 6A illustrates one configuration for mounting or fixing the monitoring system 2 on the roof 4, and FIG. 6B illustrates one configuration for mounting the monitoring system 2 in the space between the roof 4 and the headlining 44 at the front side of the roof 4. As illustrated in FIG. 6A, the casing 20 of the monitoring system 2 can be fixed on the roof 4 of the vehicle 1 by using fixing members 21. Specifically, mounting members 22 extended from a bottom face of the casing 20 of the monitoring system 2 can be fixed on the roof 4 by using the fixing members 21. For example, the mounting members 22 may extend to a right side and a left side of the casing 20. This configuration increases the number of the parts of the monitoring system 2 and requires a fixing work of the monitoring system 2 on the roof 4 using the fixing members 21. The installation position of the monitoring system 2 may deviate depending on the fixing work of the fixing members 21, and the appearance of the monitoring system 2 may become prominent relative to the appearance of the roof 4, and the fixing work of the fixing members 21 is required to be controlled correctly because the monitoring system 2 may not function correctly if the fixing work of the fixing members 21 is not performed correctly.

By contrast, when the casing 20 of the monitoring system 2 is formed integrally with the roof 4 of the vehicle 1 at the front side the roof 4 as illustrated in FIG. 6B, the monitoring system 2 can be mounted or fixed in the space between the roof 4 and headlining 44 of the vehicle 1 by fixing the image capture unit 6 in the casing 20, in which an installation error of the monitoring system 2 with respect to the roof 4 can be reduced, in particular prevented, and the appearance of the monitoring system 2 can be integrated with the appearance of the roof 4, and malfunctions of the monitoring system 2 causable by the fixing work of the fixing members 21 can be prevented because the fixing members 21 are not used for the configuration of FIG. 6B.

A description is given of experiments conducted by using the monitoring system 2 of the one or more example embodiments.

### (Experiment one)

In this experiment, the monitoring system 2 used as the stereo camera was mounted or fixed in the space between the roof 4 and the headlining 44 of the vehicle 1 at the front side of the vehicle 1, and the monitoring system 2 was used to capture images of objects ahead of the vehicle 1 to perform the range finding to measure distance to objects and a road face. Under this configuration, a vehicle occupant was placed on a driver's sheet and a vehicle occupant was placed on a passenger seat to perform a sensory test of a sense of oppression above the heads of the vehicle occupants. The result of this experiment using a configuration disposing the monitoring system 2 between the roof 4 and the headlining 44 of the vehicle 1 became the same result of a configuration of a vehicle not mounted with the stereo camera. The sensory test is a test to determine quality of products based on sensory of persons such as visual sense, auditory sense, tactile sense, taste sense, and olfactory sense. By contrast, when the stereo camera (monitoring system 2) was mounted or fixed inside the vehicle 1, the vehicle occupants, especially the driver and occupants of larger body, felt a sense of oppression compared to the vehicle not mounted with the stereo camera.

### (Experiment two)

In this experiment, the monitoring system 2 used as the stereo camera was mounted or fixed in the space between the roof 4 and the headlining 44 of the vehicle 1 at the front side of the vehicle 1, and the monitoring system 2 was used to capture images of objects ahead of the vehicle 1 to perform the range finding to measure distance to objects and a road face. Under this configuration, a marker was gradually moved from a position above the top side of the windshield 3 to the lower side of the windshield 3 to perform the sensory test of the field of view by vehicle occupants including a driver. When the monitoring system 2 was mounted or fixed in the space between the roof 4 and the headlining 44 of the vehicle 1, the vehicle occupants recognized the marker at a time point when the marker crossed the upper boundary of the roof 4 and the windshield 3.

By contrast, when the monitoring system 2 is mounted or fixed inside the vehicle 1, the vehicle occupants recognized the marker at a time point when the marker crossed the upper boundary of the roof 4 and the windshield 3 and then moved to the lower side for about 10 cm to 15 cm from the upper boundary of the roof 4 and the windshield 3, in which an viewpoint error of the driver was included.

### (Experiment three)

In this experiment, the monitoring system 2 used as the stereo camera was mounted or fixed in the space between the roof 4 and the headlining 44 of the vehicle 1 at the front side of the vehicle 1, and the monitoring system 2 was used to capture images of objects ahead of the vehicle 1 to perform the range finding to measure distance to objects and a road face. Under a configuration that the background reflections or reflected glare of the instrument panel 9 occurring on the windshield 3 of the vehicle 1, a simulation was performed by using an actual vehicle. When the monitoring system 2 was mounted or fixed in the space between the roof 4 and the headlining 44 of the vehicle 1 at the front side of the roof 4, the monitoring system 2 captured images without an effect of the background reflections or reflected glare occurring on the windshield 3, and the monitoring system 2 performed the range finding correctly. By contrast, when the monitoring system 2 was mounted or fixed inside the vehicle 1, the background reflections or reflected glare occurring on the windshield 3 was also captured as images by the image capture unit 6, and the precision of the range finding by the monitoring system 2 used as the stereo camera deteriorated.

### (Experiment four)

In this experiment, the monitoring system 2 used as the stereo camera was mounted or fixed in the space between the roof 4 and the headlining 44 of the vehicle 1 at the front side of the vehicle 1, and the monitoring system 2 was used to capture images of objects ahead of the vehicle 1 to perform the range finding to measure distance to objects and a road face. Under a configuration that fogging occurring on the windshield 3 of the vehicle 1, a simulation was performed by using an actual vehicle. When the monitoring system 2 was mounted or fixed in the space between the roof 4 and the headlining 44 of the vehicle 1 at the front side of the roof 4, the monitoring system 2 captured images without an effect of the fogging occurring on the windshield 3, and the monitoring system 2 performed the range finding correctly. By contrast, when the monitoring system 2 was mounted or fixed inside the vehicle 1, the fogging occurring on the windshield 3 was also captured as images by the image capture unit 6, and the precision of the range finding by the monitoring system 2 used as the stereo camera deteriorated.

### (Experiment five)

In this experiment, a drive recorder employing a monocular camera was mounted or fixed inside the vehicle 1. The drive recorder was mounted or fixed near a room mirror attached to the windshield 3 inside the vehicle 1 to capture images of objects ahead of the vehicle 1. The drive recorder was mounted or fixed at a substantially center position of the vehicle 1 to set a capturing range of the drive recorder ahead of the vehicle. Under this configuration, the compliance to the vehicle inspection regulation "5-47" regulating the objects disposable on the window glass was checked by using an actual vehicle. The experiment result indicates that the attached position of the drive recorder did not comply with the vehicle inspection regulation "5-47" regulating the objects disposable on the window glass depending on the attached area of the drive recorder on the windshield 3, the shape of the room mirror, the shape of the rain sensor, and the attachment positions of various inspection certificates labels that vary among various types of vehicles. For example, in some cases, the area of the drive recorder attached on the windshield 3 exceeded the twenty (20) percent at the upper side of the windshield 3.

By contrast, when the drive recorder employing the monocular camera was mounted or fixed in the space between the roof 4 and the headlining 44 of the vehicle, the drive recorder complied with the vehicle inspection regulation "5-47" regulating the objects disposable on the window glass for any attachment positions of the room mirror and various inspection certificates labels at the upper part of the windshield 3.

### (Variant examples)

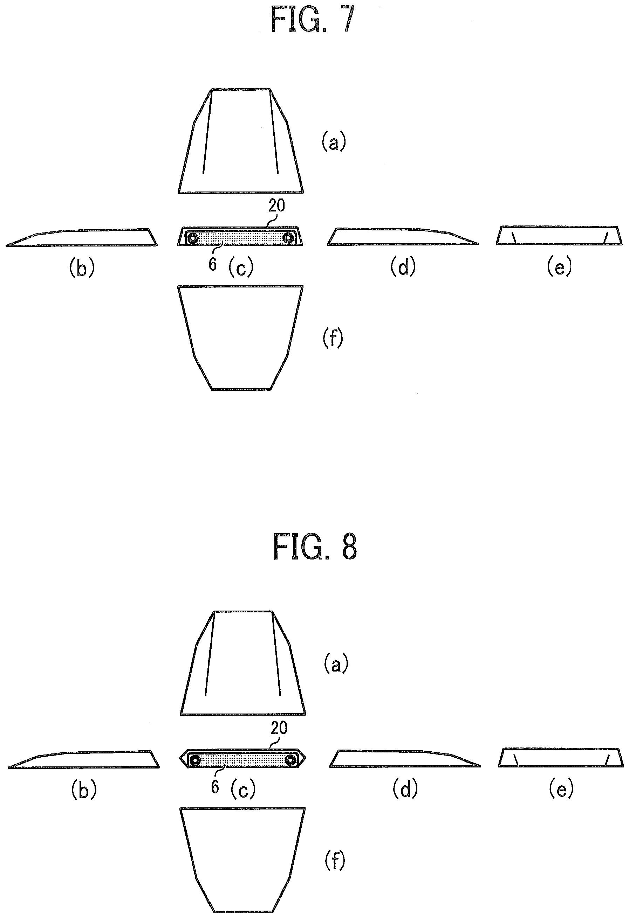

A description is given of variant examples of a shape of the casing 20 of the monitoring system 2 with reference to drawings. FIGs. 7(a) to 7(f) illustrate six standard views of the casing 20 of the monitoring system 2 shown in FIG. 1. FIG. 7(a) is a top view, FIG. 7(b) is a left-side view, FIG. 7(c) is a front view, FIG. 7(d) is a right-side view, FIG. 7(e) is a rear view, and FIG. 7(f) is a bottom view of the casing 20 of the monitoring system 2. The casing 20 of the monitoring system 2 encases the image capture unit 6 including the image capture devices 6a and 6b and the control unit including the signal generator 100.

As illustrated in FIGs. 7(a) to 7(f), the casing 20 has a substantially polygonal shape such as a trapezoidal shape when viewed from a front direction of the casing 20. The casing 20 has a substantially polygonal shape such as a substantially trapezoidal shape when viewed from a top direction of the casing 20, and the substantially trapezoidal shape is tapered from a front to rear direction of the casing 20 by decreasing a width. The casing 20 has a mountain shape when viewed from a right side direction and a left side direction of the casing 20, and the mountain shape includes a slope having a gradient of 45 degrees or more at the front side of the casing 20, and a slope having a gradient of less than 45 degrees at the rear side of the casing 20, in which the mountain shape has a slope from the front side to the rear side of the casing 20. The casing 20 has a substantially polygonal shape such as a substantially trapezoidal shape when viewed from a bottom side of the casing 20, and the substantially trapezoidal shape is tapered from the front to rear direction of the casing 20 by decreasing a width. Typically, the bottom face of the casing 20 is a flat face while the roof 4 of the vehicle 1 is a curve face. Therefore, a rubber sheet or soft resin can be filled between the casing 20 and the roof 4. The polygonal shape of the casing 20 is not limited to the trapezoidal shape but other shapes can be employed. Further, the casing 20 can be formed in any shapes other than the polygonal shape as required.

FIGs. 8(a) to 8(f) illustrate another six standard views of the casing 20 of the monitoring system 2 shown in FIG. 1. FIG. 8(a) is a top view, FIG. 8(b) is a left-side view, FIG. 8(c) is a front view, FIG. 8(d) is a right-side view, FIG. 8(e) is a rear view, and FIG. 8(f) is a bottom view of the casing 20 of the monitoring system 2. Different from the configuration of FIGs. 7(a) to 7(f), the configuration of FIGs. 8(a) to 8(f) has a hexagonal shape when viewed from the front direction of the casing 20. The monitoring system 2 of FIGs. 8(a) to 8(f) can devise the same effect of the monitoring system 2 shown in FIG. 1.

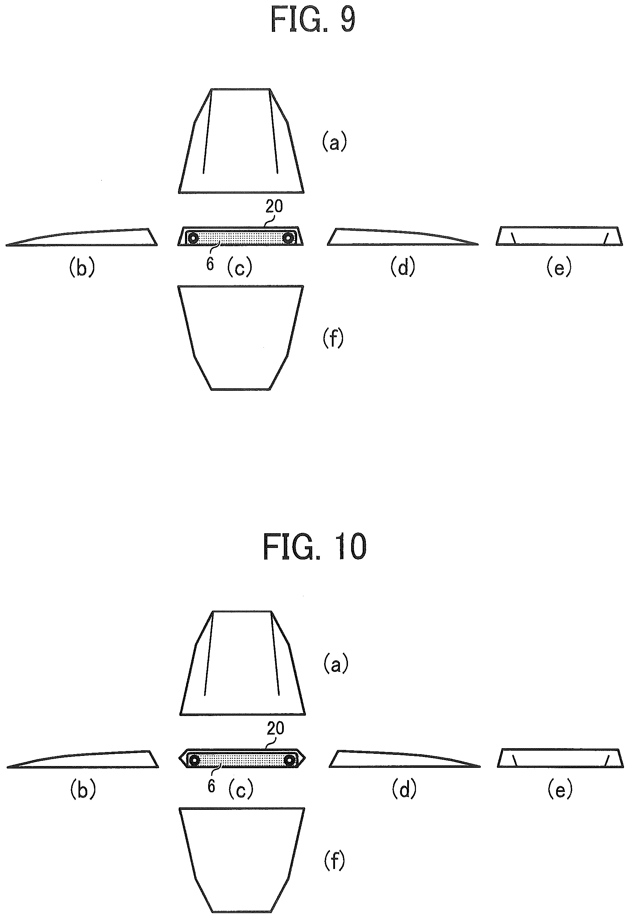

FIGs. 9(a) to 9(f) illustrate another six standard views of the casing 20 of the monitoring system 2 shown in FIG. 1. FIG. 9(a) is a top view, FIG. 9(b) is a left-side view, FIG. 9(c) is a front view, FIG. 9(d) is a right-side view, FIG. 9(e) is a rear view, and FIG. 9(f) is a bottom view of the casing 20 of the monitoring system 2. Different from the configuration of FIGs. 7(a) to 7(f), the configuration of FIGs. 9(a) to 9(f) has a gradually sloped shape when viewed from the right side direction and a left side direction of the casing 20. The monitoring system 2 of FIGs. 9(a) to 9(f) can devise the same effect of the monitoring system 2 shown in FIG. 1.

FIGs. 10(a) to 10(f) illustrate another six standard views of the casing 20 of the monitoring system 2 shown in FIG. 1. FIG. 10(a) is a top view, FIG. 10(b) is a left-side view, FIG. 10(c) is a front view, FIG. 10(d) is a right-side view, FIG. 10(e) is a rear view, and FIG. 10(f) is a bottom view of the casing 20 of the monitoring system 2. Different from the configuration of FIGs. 9(a) to 9(f), the configuration of FIGs. 10(a) to 10(f) has a hexagonal shape when viewed from the front direction of the casing 20. The monitoring system 2 of FIGs. 10(a) to 10(f) can devise the same effect of the monitoring system 2 shown in FIG. 1.

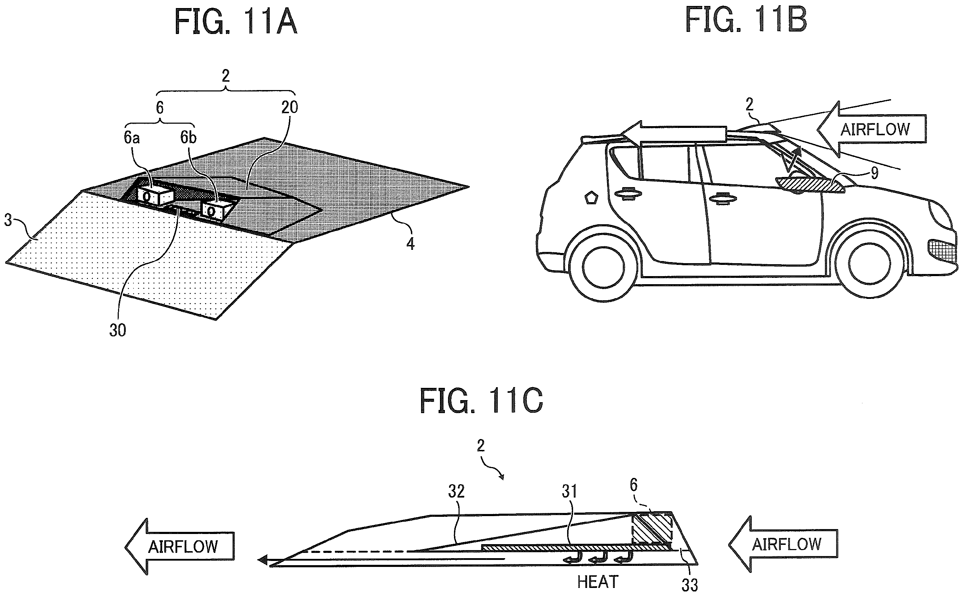

A description is given of another example embodiment of the monitoring system 2 with reference to FIG. 11. FIG. 11A illustrates a configuration of the monitoring system 2 mounted or fixed on the roof 4 of the vehicle 1 disposed with a ventilation mechanism 30, FIG. 11B illustrates an airflow around the roof 4 when the vehicle 1 is traveling or moving, and FIG. 11C is a schematic cross-sectional view of the monitoring system 2 of FIG. 11A. Different from the above described previous example embodiment, another example embodiment has the ventilation mechanism 30 as illustrated in FIG. 11. In an example configuration of FIG. 11, the monitoring system 2 is mounted or fixed in the space between the roof 4 and the headlining 44 of the vehicle 1 at the front side of the roof 4, and the monitoring system 2 captures images of objects ahead of the vehicle 1 to perform the range finding to determine distance from the vehicle 1 to objects and a road face.

As illustrated in FIG. 11, the monitoring system 2 of another example embodiment includes a vent hole 33 as the ventilation mechanism 30. As illustrated in FIG. 11, the image capture unit 6 can be disposed on the circuit board 31, and encased by a housing 32 used also as a heat dissipater. The vent hole 33 can be disposed at any positions between the two image capture devices 6a and 6b of the monitoring system 2 used as the stereo camera system. For example, the vent hole 33 can be disposed at the center of the two image capture devices 6a and 6b or near the center of the two image capture devices 6a and 6b. When the stereo camera receives heat effect, the base line of the stereo camera expands due to heat expansion, and the range finding cannot be performed with higher precision. Especially, the center of the pair of the image capture devices 6a and 6b more likely receives heat effect, and thereby the base line of the stereo camera more likely expands. By disposing the vent hole 33 at the center or near the center of the two image capture devices 6a and 6b, the expansion of the base line of the stereo camera due to heat effect can be suppressed effectively. Further, the circuit board 31 of the image capture devices 6a and 6b that emits heat is typically disposed between the pair of the image capture devices 6a and 6b. By disposing the vent hole 33 at the center or near the center of the two image capture devices 6a and 6b, the circuit board 31 can be cooled effectively.

Under the environment that the room temperature of the vehicle 1 was high temperature, a continuous operational test was performed. The continuous operational test was performed by running the vehicle 1 for a given distance, stopping the vehicle 1 after running the given distance, and running the vehicle 1 again, in which images of object ahead of the vehicle 1 were being captured to perform the range finding. When the monitoring system 2 was mounted or fixed in the space between the roof 4 and the headlining 44 of the vehicle 1 at the front side of the roof 4, heat generated by the image capture unit 6 was exhausted to the outside with an effect of airflow caused by the ventilation mechanism 30 disposed for the vehicle 1 that is running, moving or traveling, with which temperature increase of the image capture unit 6 was suppressed. By contrast, when the image capture unit 6 was mounted or fixed in the room of the vehicle 1, heat generated by the image capture unit 6 (6a, 6b) was not exhausted to the outside of the vehicle 1, and it was confirmed that high temperature condition continued.

The monitoring system 2 generates heat because the image capturing is continuously performed with a higher image capturing frame rate. Therefore, the above described cooling mechanism may be required. The above described cooling effect can be also attained by disposing a cooling fan. However, the cooling fan generates noise, and heat may be exhausted in the room of the vehicle 1, with which comfortableness in the room of the vehicle 1 may deteriorate. Therefore, by mounting the monitoring system 2 on the roof 4 or in the space between the roof 4 and headlining 44 of the vehicle 1 at the front side of the vehicle 1, and the vent hole 33, comfortableness in the room of the vehicle 1 can be secured while effectively cooling the monitoring system 2.

When the continuous operational test was also performed while the vehicle 1 stood still, the heat generation condition became the same level when the monitoring system 2 was mounted or fixed in the room of the vehicle 1. Since the continuously-performed image capturing with a higher image capturing frame rate is not required when vehicle 1 stops moving or stands still, the CPU 11 can set a lower image capturing frame rate to the image capture unit 6 when the vehicle 1 stops moving or stands still. Therefore, the image capturing frame rate of the pair of the image capture unit 6 when the vehicle 1 stops moving or stands still can be set smaller than the image capturing frame rate of the pair of the image capture unit 6 when the vehicle 1 is traveling or moving, with which heat generation can be further suppressed.

As to the above described one or more example embodiments, the monitoring system 2 does not receive the effect of stains and foreign objects adhering on the windshield 3 and the background reflections or reflected glare occurring on the windshield 3. Therefore, the monitoring system 2 can transmit correct image data to the control unit of the vehicle 1, and thereby the automatic braking, vehicle-to-vehicle distance control system, automatic lane keeping system, and alarm or warning system can be activated correctly, with which traffic accidents can be reduced. Further, when the monitoring system 2 is mounted or fixed on the roof 4 or in the space between the roof 4 and the headlining 44 of the vehicle 1, a sense of oppression is not felt by the vehicle occupants in the vehicle, the field of view is not blocked, and the monitoring system 2 can comply with the vehicle inspection regulation.

Further, as to the above described example embodiments, the expansion of the base line of the stereo camera due to generated heat can be suppressed effectively by disposing the ventilation mechanism.

Further, as to the above described example embodiments, the roof 4 is made as a roof panel but not limited hereto. The roof 4 can be a sheet metal used for an outer panel of the vehicle including the roof.

The above described monitoring system mountable or fixable to the vehicle can effectively perform the range finding without receiving the effect of stains adhering on the windshield and the lens of the image capture device, without causing a sense of oppression in the internal space of the vehicle, without blocking the field of view from the internal space of the vehicle, and by complying to the vehicle inspection regulation.

Numerous additional modifications and variations for the communication terminal, information processing system, and information processing method, a program to execute the information processing method by a computer, and a storage or carrier medium of the program are possible in light of the above teachings. It is therefore to be understood that within the scope of the appended claims, the disclosure of the present invention may be practiced otherwise than as specifically described herein. For example, elements and/or features of different examples and illustrative embodiments may be combined each other and/or substituted for each other within the scope of this disclosure and appended claims.

## Claims

1. A monitoring system (2) mountable on a vehicle (1) comprising:
an image capture unit (6) including a pair of image capture devices (6a, 6b) disposed side by side in a horizontal direction to capture an image of an object ahead of the vehicle (1), the image capture unit (6) fixable on an exterior frame of the vehicle (1);
a distance calculator (11, 12, 13) configured to calculate a distance between the vehicle (1) and the object ahead of the vehicle (1) based on a signal transmitted from the pair of the image capture devices (6a, 6b); and
a signal generator (100) to generate a control signal to control the vehicle (1) based on a signal transmitted from the distance calculator (11, 12, 13),and
**characterized by**
a casing (20) constituted to be formed integrally with a roof (4) of vehicle (1),
wherein the image capture unit (6) is fixable in the casing (20) constituted to be formed at a space between the roof (4) and the headlining (44) of the vehicle (1),
wherein the image capture unit (6) including the pair of image capture devices (6a, 6b) is settable in the casing (20) that is formed integrally with an exterior frame of the vehicle (1).

2. The monitoring system (2) of claim 1, wherein the exterior frame is a roof (4) of the vehicle (1).

3. The monitoring system (2) of claim 2, wherein the casing (20) is disposable on the roof (4) of the vehicle (1) to encase the image capture unit (6) and the signal generator (100) therein,
wherein the casing (20) is a member fixable on the roof (4), or the casing (20) is formed integrally with the roof (4) to set a space between the roof (4) and a headlining (44) of the vehicle (1).

4. The monitoring system (2) of claim 3, wherein the image capture unit (6) including the pair of the image capture devices (6a, 6b) and the signal generator (100) are fixable on the roof (4) or in the space between the roof (4) and the headlining (44) by fixing the image capture unit (6) and the signal generator (100) in the casing (20).

5. The monitoring system (2) of any of claims 1 to 4,
wherein the casing (20) has a substantially polygonal shape when viewed from a front direction of the casing (20),
wherein the casing (20) has a substantially polygonal shape when viewed from a top direction of the casing (20), the substantially polygonal shape viewed from the top direction tapering from a front to rear direction of the casing (20) by decreasing a width,
wherein the casing (20) has a mountain shape when viewed from a side direction of the casing (20),
wherein the casing (20) has a substantially polygonal shape when viewed from a bottom direction of the casing (20), the substantially polygonal shape viewed from the bottom direction tapering from the front to rear direction of the casing (20) by decreasing a width.

6. The monitoring system (2) of claim 5,
wherein the casing (20) has a substantially trapezoidal shape as the substantially polygonal shape when viewed from the front direction of the casing (20),
wherein the casing (20) has a substantially trapezoidal shape as the substantially polygonal shape when viewed from the top direction of the casing (20),
wherein the casing (20) has the mountain shape when viewed from the side direction of the casing (20),
wherein the casing (20) has a substantially trapezoidal shape as the substantially polygonal shape when viewed from the bottom direction of the casing (20).

7. The monitoring system (2) of claims 5 or 6, wherein the mountain shape of the casing (20) viewed from the side direction of the casing (20) has a slope having a gradient of 45 degrees or more at a front side of the casing (20) and a slope having a gradient of less than 45 degrees at a rear side of the casing (20), or the mountain shape of the casing (20) viewed from the side direction of the casing (20) has a gradient from the front to rear direction of the casing (20).

8. The monitoring system (2) of any one of claims 1 to 7, wherein the casing (20) includes a mounting member (22) extended from a bottom of the casing (20) to a left side and a right side of the casing (20), and the casing (20) is fixable on the roof (4) of the vehicle (1) by fixing the mounting member (22) on the roof (4) by using a fixing member (21).

9. The monitoring system (2) of any one of claims 1 to 8, wherein the casing (20) has an opening coverable by a cover (5) made of the same material used for a windshield (3) of the vehicle (1).

10. The monitoring system (2) of any one of claims 1 to 9, further comprising a vent hole (33) disposed near the pair of the image capture devices (6a, 6b).

11. The monitoring system (2) of claim 10, wherein the vent hole (33) is disposed at the center position between the pair of the image capture devices (6a, 6b).

12. The monitoring system (2) of any one of claims 1 to 11, wherein an image capturing frame rate of the pair of the image capture devices (6a, 6b) when the vehicle (1) stands still is set smaller than an image capturing frame rate of the pair of the image capture devices (6a, 6b) when the vehicle (1) is moving.

13. A vehicle (1) comprising the monitoring system (2) of any one of claims 1 to 12.

## Patentansprüche

1. Beobachtungssystem (2), das auf einem Fahrzeug (1) montiert werden kann, enthaltend:
eine Bildaufnahmeeinheit (6), die ein Paar Bildaufnahmegeräte (6a, 6b) enthält, die Seite an Seite in einer horizontalen Richtung angeordnet sind, um ein Bild eines Objekts vor dem Fahrzeug (1) aufzunehmen, wobei die Bildaufnahmeeinheit (6) auf einem Außenrahmen des Fahrzeugs (1) fixierbar ist;
einen Entfernungsrechner (11, 12, 13), der eingerichtet ist, eine Entfernung zwischen dem Fahrzeug (1) und dem Objekt vor dem Fahrzeug (1) basierend auf einer von dem Paar Bildaufnahmegeräten (6a, 6b) übertragenen Signal zu berechnen; und
einen Signalgenerator (100) zum Erzeugen eines Steuersignals zum Steuern des Fahrzeugs (1) basierend auf einem von dem Entfernungsrechner (11, 12, 13) übertragenen Signal und
**gekennzeichnet durch**
ein Gehäuse (20), das eingerichtet ist, einteilig mit einem Dach (4) des Fahrzeugs (1) ausgebildet zu sein,
wobei die Bildaufnahmeeinheit (6) in dem Gehäuse (20) fixierbar ist, das so ausgelegt ist, dass es in einem Raum zwischen dem Dach (4) und dem Dachhimmel (44) des Fahrzeugs (1) gebildet wird,
wobei die Bildaufnahmeeinheit (6), die das Paar Bildaufnahmegeräte (6a, 6b) enthält, in das Gehäuse (20), das einteilig mit dem Außenrahmen des Fahrzeugs (1) geformt ist, eingesetzt werden kann.

2. Beobachtungssystem (2) gemäß Anspruch 1, bei dem der Außenrahmen ein Dach (4) des Fahrzeugs (1) ist.

3. Beobachtungssystem (2) gemäß Anspruch 2, bei dem das Gehäuse (20) auf dem Dach (4) des Fahrzeugs (1) angeordnet werden kann, um die Bildaufnahmeeinheit (6) und den Signalgenerator (100) in sich einzuhausen,
wobei das Gehäuse (20) ein Glied ist, das auf dem Dach (4) fixiert werden kann, oder das Gehäuse (20) integral mit dem Dach (4) gebildet ist, um einen Raum zwischen dem Dach (4) und dem Dachhimmel (44) des Fahrzeugs (1) zu bilden.

4. Beobachtungssystem (2) gemäß Anspruch 3, bei dem die Bildaufnahmeeinheit (6), die das Paar Bildaufnahmegeräte (6a, 6b) enthält, und der Signalgenerator (100) auf dem Dach (4) oder in dem Raum zwischen dem Dach (4) und dem Dachhimmel (44) fixiert werden können, indem die Bildaufnahmeeinheit (6) und der Signalgenerator (100) in dem Gehäuse (20) fixiert werden.

5. Beobachtungssystem (2) gemäß irgendeinem der Ansprüche 1 bis 4,
bei dem das Gehäuse (20) bei Betrachtung aus einer vorderen Richtung des Gehäuses (20) eine im Wesentlichen mehreckige Gestalt aufweist,
wobei das Gehäuse (20) bei Betrachtung aus einer oberen Richtung des Gehäuses (20) eine im Wesentlichen mehreckige Gestalt hat, wobei die bei Betrachtung aus der oberen Richtung im Wesentlichen mehreckige Gestalt sich von einer vorderen zu einer hinteren Richtung des Gehäuses (20) durch Abnahme einer Breite verjüngt,
wobei das Gehäuse (20) bei Betrachtung von einer Seitenrichtung des Gehäuses (20) eine Berggestalt aufweist,
wobei das Gehäuse (20) bei Betrachtung aus einer unteren Richtung des Gehäuses (20) eine im Wesentlichen mehreckige Gestalt aufweist, wobei die bei Betrachtung aus der unteren Richtung im Wesentlichen mehreckige Gestalt sich von einer vorderen zu einer hinteren Richtung des Gehäuses (20) durch Abnahme einer Breite verjüngt.

6. Beobachtungssystem (2) gemäß Anspruch 5,
bei dem das Gehäuse (20) bei Betrachtung aus der vorderen Richtung des Gehäuses (20) eine im Wesentlichen trapezoidförmige Gestalt als die im Wesentlichen mehreckige Gestalt aufweist,
wobei das Gehäuse (20) bei Betrachtung aus der oberen Richtung des Gehäuses (20) eine im Wesentlichen trapezoide Gestalt als die im Wesentlichen mehreckige Gestalt aufweist,
wobei das Gehäuse (20) die Berggestalt bei Betrachtung aus der Seitenrichtung des Gehäuses (20) aufweist,
wobei das Gehäuse (20) bei Betrachtung aus der unteren Richtung des Gehäuses (20) eine im Wesentlichen trapezoide Gestalt als die im Wesentlichen mehreckige Gestalt aufweist.

7. Beobachtungssystem (2) gemäß Anspruch 5 oder 6, bei dem die Berggestalt des Gehäuses (20) bei Betrachtung aus der Seitenrichtung des Gehäuses (20) ein Gefälle aufweist, das einen Gradienten von 45 Grad oder mehr an einer Vorderseite des Gehäuses (20) aufweist, und ein Gefälle aufweist, das einen Gradienten von weniger als 45 Grad an einer Rückseite des Gehäuses (20) aufweist, oder die Berggestalt des Gehäuses (20) bei Betrachtung aus der Seitenrichtung des Gehäuses (20) einen Gradienten von der vorderen zur hinteren Richtung des Gehäuses (20) aufweist.

8. Beobachtungssystem (2) gemäß irgendeinem der Ansprüche 1 bis 7, bei dem das Gehäuse (20) ein Montageglied (22) enthält, das sich von einem Unterteil des Gehäuses (20) zu einer linken Seite und einer rechten Seite des Gehäuses (20) erstreckt, und das Gehäuse (20) auf dem Dach (4) des Fahrzeugs (1) durch Fixieren des Montageglieds (22) auf dem Dach (4) durch Verwenden eines Fixierglieds (21) fixiert werden kann.

9. Beobachtungssystem (2) gemäß irgendeinem der Ansprüche 1 bis 8, bei dem Gehäuse (20) eine Öffnung aufweist, die durch eine Bedeckung (5), die aus demselben Material, das für eine Windschutzscheibe (3) des Fahrzeugs (1) verwendet wird, bedeckt werden kann.

10. Beobachtungssystem (2) gemäß irgendeinem der Ansprüche 1 bis 9, ferner enthaltend ein Abluftloch (33), das nahe dem Paar Bildaufnahmegeräte (6a, 6b) angeordnet ist.

11. Beobachtungssystem (2) gemäß Anspruch 10, bei dem das Abluftloch (33) an einer Mittelposition zwischen dem Paar Bildaufnahmegeräte (6a, 6b) angeordnet ist.

12. Beobachtungssystem (2) gemäß irgendeinem der Ansprüche 1 bis 11, bei dem eine Bildrahmenaufnahmerate des Paars Bildaufnahmegeräte (6a, 6b) kleiner eingestellt ist, wenn das Fahrzeug (1) steht, als eine Bildrahmenaufnahmerate des Paars Bildaufnahmegeräte (6a, 6b), wenn das Fahrzeug (1) sich bewegt.

13. Fahrzeug (1), enthaltend das Beobachtungssystem (2) gemäß irgendeinem der Ansprüche 1 bis 12.

## Revendications

1. Système de surveillance (2) pouvant être monté sur un véhicule (1) comprenant :
une unité de capture d'image (6) comprenant une paire de dispositifs de capture d'image (6a, 6b) disposés côte à côte dans un sens horizontal pour capturer une image d'un objet devant le véhicule (1), l'unité de capture d'image (6) pouvant être fixée sur un cadre extérieur du véhicule (1) ;
un calculateur de distance (11, 12, 13) conçu pour calculer une distance entre le véhicule (1) et l'objet devant le véhicule (1) en fonction d'un signal transmis depuis la paire des dispositifs de capture d'image (6a, 6b) ; et
un générateur de signal (100) pour générer un signal de commande pour commander le véhicule (1) en fonction d'un signal transmis depuis le calculateur de distance (11, 12, 13), et
**caractérisé par**
un boîtier (20) constitué pour être formé d'un seul tenant avec un toit (4) de véhicule (1),
l'unité de capture d'image (6) pouvant être fixé dans le boîtier (20) constitué pour être formé dans un espace entre le toit (4) et la doublure de toit (44) du véhicule (1),
l'unité de capture d'image (6) comprenant la paire de dispositifs de capture d'image (6a, 6b) pouvant être positionnée dans le boîtier (20) qui est formé d'un seul tenant avec un cadre extérieur du véhicule (1).

2. Système de surveillance (2) selon la revendication 1, dans lequel le cadre extérieur est un toit (4) du véhicule (1).

3. Système de surveillance (2) selon la revendication 2, dans lequel le boîtier (20) peut être disposé sur le toit (4) du véhicule (1) pour encapsuler l'unité de capture d'image (6) et le générateur de signal (100) à l'intérieur de celle-là,
le boîtier (20) étant un élément pouvant être fixé sur le toit (4), ou le boîtier (20) étant formé d'un seul tenant avec le toit (4) pour créer un espace entre le toit (4) et une doublure de toit (44) du véhicule (1).

4. Système de surveillance (2) selon la revendication 3, dans lequel l'unité de capture d'image (6) comprenant la paire des dispositifs de capture d'image (6a, 6b) et le générateur de signal (100) pouvant être fixés sur le toit (4) ou dans l'espace entre le toit (4) et la doublure de toit (44) en fixant l'unité de capture d'image (6) et le générateur de signal (100) dans le boîtier (20).

5. Système de surveillance (2) selon l'une quelconque des revendications 1 à 4,
dans lequel le boîtier (20) présente une forme sensiblement polygonale lorsque vu depuis une direction avant du boîtier (20),
dans lequel le boîtier (20) présente une forme sensiblement polygonale lorsque vu depuis une direction supérieure du boîtier (20), la forme sensiblement polygonale vue depuis la direction supérieure effilée de l'avant vers l'arrière du boîtier (20) en réduisant une largeur,
dans lequel le boîtier (20) présente une forme de montagne lorsque vu depuis une direction latérale du boîtier (20),
dans lequel le boîtier (20) présente une forme sensiblement polygonale lorsque vu depuis une direction inférieure du boîtier (20), la forme sensiblement polygonale vu depuis la direction inférieure de l'avant vers l'arrière du boîtier (20) en réduisant une largeur.

6. Système de surveillance (2) selon la revendication 5,
dans lequel le boîtier (20) présente une forme sensiblement trapézoïdale en tant que forme sensiblement polygonale lorsque vue depuis la direction avant du boîtier (20),
dans lequel le boîtier (20) présente une forme sensiblement trapézoïdale en tant que forme sensiblement polygonale lorsque vu depuis la direction supérieure du boîtier (20),
dans lequel le boîtier (20) présente la forme d'une montagne lorsque vu depuis la direction latérale du boîtier (20),
dans lequel le boîtier (20) présente une forme sensiblement trapézoïdale en tant que forme sensiblement polygonale lorsque vu depuis la direction inférieure du boîtier (20).

7. Système de surveillance (2) selon les revendications 5 ou 6, dans lequel la forme de montagne du boîtier (20) vu depuis la direction latérale du boîtier (20) présente une inclinaison présentant un gradient de 45 degrés ou plus sur un côté avant du boîtier (20) et une inclinaison présentant un gradient de moins de 45 degrés sur un côté arrière du boîtier (20), ou la forme de montagne du boîtier (20) vu depuis la direction latérale du boîtier (20) présente un gradient de l'avant vers l'arrière du boîtier (20).

8. Système de surveillance (2) selon l'une quelconque des revendications 1 à 7, dans lequel le boîtier (20) comprend un élément de montage (22) étendu depuis un fond du boîtier (20) vers un côté gauche et un côté droit du boîtier (20), et le boîtier (20) peut être fixé sur le toit (4) du véhicule (1) par la fixation de l'élément de montage (22) sur le toit (4) à l'aide d'un élément de fixation (21).

9. Système de surveillance (2) selon l'une quelconque des revendications 1 à 8, dans lequel le boîtier (20) présente une ouverture pouvant être recouverte par un recouvrement (5) constitué du même matériau utilisé pour un parebrise (3) du véhicule (1).

10. Système de surveillance (2) selon l'une quelconque des revendications 1 à 9, comprenant un outre un orifice d'évacuation (33) disposé près de la paire des dispositifs de capture d'image (6a, 6b).

11. Système de surveillance (2) selon la revendication 10, dans lequel l'orifice d'évacuation (33) est disposé dans la position centrale entre la paire des dispositifs de capture d'image (6a, 6b).

12. Système de surveillance (2) selon l'une quelconque des revendications 1 à 11, dans lequel une fréquence de trame de capture d'image de la paire des dispositifs de capture d'image (6a, 6b) lorsque le véhicule (1) est immobile est définie comme étant inférieure à une fréquence de trame de capture d'image de la paire des dispositifs de capture d'image (6a, 6b) lorsque le véhicule (1) est en déplacement.

13. Véhicule (1) comprenant le système de surveillance (2) selon l'une quelconque des revendications 1 à 12.
